# EUROPÄISCHE PATENTSCHRIFT

(11) **EP 3 398 664 B1**
(45) Veröffentlichungstag und Bekanntmachung des Hinweises auf die Patenterteilung: **02.03.2022**
(21) Anmeldenummer: 18170363.8
(22) Anmeldetag: 02.05.2018
(51) Int. Cl.: B32B 27/06, B32B 27/30, A63C 5/00, B32B 27/40, B32B 27/08

(54) **OBERFLÄCHENFOLIE FÜR EIN SPORTGERÄT**
SURFACE FILM FOR A SPORTING DEVICE
FEUILLE DE SURFACE POUR UN APPAREIL DE SPORT

(30) Priorität: 02.05.2017 AT 503552017
(43) Veröffentlichungstag der Anmeldung: 07.11.2018
(73) Patentinhaber: Isosport Verbundbauteile Gesellschaft m.b.H., 7000 Eisenstadt (AT)
(72) Erfinder: GORNIK, Christian, 2491 Neufeld (AT)
(74) Vertreter: Torggler & Hofmann Patentanwälte - Innsbruck

(56) Entgegenhaltungen:
- DE-A1-102008 002 599
- US-A- 5 437 755
- US-A1- 2005 084 685

## Beschreibung

Die vorliegende Erfindung betrifft eine Oberflächenfolie für ein Sportgerät, insbesondere Skier, Snowboards oder Wassersportgeräte, mit den Merkmalen des Oberbegriffs des Anspruchs 1, sowie ein Sportgerät, insbesondere einen Ski, ein Snowboard oder ein Wassersportgerät, mit einer solchen Oberflächenfolie.

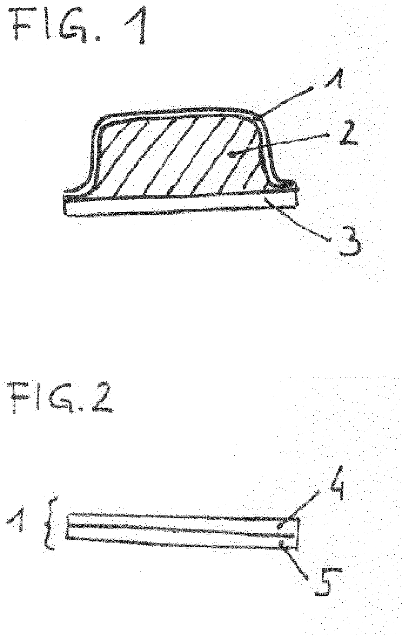

Gattungsgemäße Sportgeräte werden im Bereich der Oberfläche hohen Beanspruchungen ausgesetzt. Figur 1 zeigt einen Querschnitt eines derartigen Sportgeräts, welches in vereinfachter Form aus einer Oberflächenfolie 1, einem Grundkörper 2 und einer Unterseite 3 besteht. Nach bekanntem Stand der Technik verwendet man an der Skioberfläche Folien mit Dicken im Bereich zwischen typischerweise 0,1 mm und 0,8 mm.

Für optimale Gestaltungsmöglichkeiten ist die Oberflächenfolie transparent und wird von hinten dekoriert. Des Weiteren werden hohe Anforderungen hinsichtlich der Verarbeitungstemperaturen und der Gebrauchstemperaturen gestellt. Die Dekoration des Skioberflächenmaterials erfolgt beispielsweise mittels Siebdruck, wobei bei dieser Dekoration die Lösemittelbeständigkeit der Folie sowie die Temperaturbeständigkeit im Trocknungsprozess von Bedeutung sind. Weiters besteht auch die Möglichkeit die Folien mittels Digitaldirektdruck zu dekorieren, wobei hier Systeme auf lösemittelhaltigen Tinten, wasserbasierenden Tinten, Latex-Tinten und UV-härtenden Tinten zum Einsatz kommen können.

Bei der Verarbeitung in der Skipresse muss das Skioberflächenmaterial Temperaturbelastungen im Bereich zwischen 60°C und 130°C, je nach Herstellungsverfahren, und Pressdrücken von einigen bar standhalten, ohne dass das Material in größerem Ausmaß zu fließen beginnt. Eine hohe Haftung zwischen der Folie und dem eingesetzten Klebesystem ist Voraussetzung für die Eignung des Folienmaterials für den Skiherstellungsprozess. Im Gebrauch, also auf der Skipiste, ist die Oberflächenfolie Temperaturen bis - 30°C, in Ausnahmefällen auch darunter, sowie einer hohen UV-Belastung ausgesetzt. Darüber hinaus treten auch große mechanische Beanspruchungen durch die Durchbiegung des Sportgerätes auf. Die Oberflächenfolie muss diese Belastungen ohne Versprödung und ohne Bruch überstehen.

Für alle oben genannten Dekorationsverfahren kommen heute transparente Folien auf Basis von relativ teurem Polyamid 11 oder Polyamid 12 als Oberflächenfolien zum Einsatz. Bei geringeren Ansprüchen hinsichtlich Verschleißbeständigkeit sind Folien aus kostengünstigerem MABS/TPU-Blends (Methylmethacrylat Acrylonitril Butadien Styrol/thermoplastisches Polyurethan) bekanntermaßen in Verwendung, wobei diese aufgrund der geringeren Temperaturbeständigkeit nicht für Thermodiffusionsdekoration geeignet sind und auch die Pressentemperaturen etwa 100°C nicht überschreiten dürfen, da ansonsten das Material zu fließen beginnt und aus der Form läuft. Das dabei verwendete MABS ist ein transparentes Blend, welches fein verteilte Kautschukpartikel enthält. Ein weiteres Problem mit MABS/TPU Blendmaterialien für Skioberflächen ist das Auftreten von sogenanntem Weißbruch bei Umformung der Folie. Dieses Phänomen tritt aufgrund des MABS-Anteils in diesen Folien auf und ist dem Fachmann bekannt. Besonders bei Skioberflächen, welche bis zur Stahlkante des Skis verlaufen, ist der Weißbruch in den engen Umformungsradien an den Kanten eine optische Beeinträchtigung, so dass MABS/TPU Oberflächenfolien für viele dieser Anwendungen ausscheiden.

Stand der Technik sind weiters 2-schichtige Folien, bei denen die Oberseite aus reinem TPU (thermoplastisches Polyurethan) und die Unterseite aus einem MABS/TPU-Blend bestehen, wobei die Oberseite aufgrund des TPUs sehr verschleißbeständig ist und die Unterseite aufgrund des MABS/TPU-Blends eine gute Haftung zu Siebdruck- und Digitaldruckfarben aufweist. Auch bei derartigen TPU-MABS/TPU-Coexfolien tritt Weißbruch auf, wenn auch in geringerem Ausmaß als bei MABS/TPU Monofolien.

In vielen Fällen wird die dekorierte Oberflächenfolie mit einem Prepreg oder einem harzgetränkten Gewebe, welches am Sportgerät dann die notwendige Steifigkeit bringt, verpresst. Dabei kommt es dann zum sogenannten Telegrafieeffekt, das bedeutet das Durchdrücken der Prepreg- oder Gewebestruktur durch die Oberflächenfolie. An der vor dem Verpressen glatten Oberfläche zeichnet sich nach dem Verpressen eine unruhige Oberflächenstruktur ab, welche sowohl optisch sichtbar als auch spürbar ist. Gewünscht ist aber eine möglichst glatte, glänzende Oberfläche auch nach dem Verpressen zu erhalten. Dies gelingt bisher nur durch Überlackieren mit einem transparenten Klarlack, was zusätzliche Kosten bei der Herstellung des Sportgerätes bewirkt.

Aus der DE 42 11 412 A1 sind Oberflächenfolien zum Aufkaschieren auf Substrate bekannt, die Styrol-Acrylnitril beinhalten.

Aus der DE 10 2005 043 760 A1 sind Dekorfolien für ein Schneegleitbrett bekannt, die Acrylnitril-Butadien-Styrol-Polymere beinhalten.

Aus der EP 1 445 124 A2 ist eine Lentikularfolie bekannt, die Acrylnitril-Butadien-Styrol oder thermoplastische Polyurethane beinhalten kann.

Aus der DE 10 2008 002 599 A1 ist ein Bauteil mit einem Substrat und einer Deckschicht aus Polyamid bekannt.

Aufgabe der Erfindung ist es, eine Oberflächenfolie für ein Sportgerät bereitzustellen, die hinsichtlich zumindest einer der folgenden verbessert ist: Verschleißbeständigkeit, Weißbruchverhalten, Temperaturbeständigkeit, fehlerfreie Oberfläche am Sportgerät.

Diese Aufgabe wird durch eine Oberflächenfolie mit den Merkmalen des Anspruchs 1 gelöst.

Dies geschieht, indem zumindest eine Schicht vorgesehen ist, die
- ein thermoplastisches Polyurethan (TPU) und ein Polystyrol (PS) beinhaltet und/oder
- ein thermoplastisches Polyurethan (TPU), ein Styrol-Acrylnitril (SAN) und ein Styrol-Maleinsäureanhydrid (SMA) beinhaltet
wobei das thermoplastische Polyurethan ein aromatisches Polyurethan ist.

Tatsächlich hat sich gezeigt, dass durch die Verwendung eines Blends mit den genannten styrolhaltigen Polymeren sogar eine Verbesserung in allen Bereichen erreicht werden kann, wobei gleichzeitig eine ausreichende Transparenz gegeben ist. Insbesondere tritt kein Weißbruch auf.

Polystyrol (PS) ist ein relativ günstiger Massenkunststoff, durch dessen Verwendung die Herstellungskosten einer erfindungsgemäßen Oberflächenfolie gesenkt werden können.

Bei Blends mit einer Komponente Styrol-Maleinsäureanhydrid (SMA) kann durch die Reaktivität der Maleinsäureanhydridgruppe eine gute Haftung zu Siebdruckfarben erreicht werden.

Weitere vorteilhafte Ausführungsformen der Erfindung sind in den abhängigen Ansprüchen definiert.

Die zumindest eine Schicht kann neben dem thermoplastischen Polyurethan (TPU) und dem Polystyrol (PS) ein Styrol-Blockcopolymer (SBC) und/oder ein Styrol-Maleinsäureanhydrid (SMA) beinhalten. Das Styropl-Blockcopolymer (SBC) verleiht dem Blend Schlagzähigkeit, was insbesondere zur Tieftemperaturschlagzähigkeit der Oberflächenfolie beiträgt. Polystyrol ist, wie bereits erwähnt, ein relativ günstiger Massenkunststoff, der darüber hinaus relativ leicht durch Lösungsmittel angelöst werden kann und daher zu verbessertem Trocknen bei Siebdruckfarben führt.

Es können einen erste Schicht und eine zweite Schicht vorgesehen sein, wobei zumindest eine der zwei Schichten ein thermoplastisches Polyurethan (TPU) beinhaltet.

Für eine einfache Herstellung kann es vorgesehen sein, dass genau zwei Schichten der Oberflächenfolie vorgesehen sind.

Das aromatisches Polyurethan kann vorzugsweise zumindest eine Härte von 50 ShoreD aufweisen.

Die Schichtdickenverteilung der ersten Schicht und der zweiten Schicht kann zwischen 20:80 und 80:20 liegen.

Die zumindest eine Schicht kann ein thermoplastisches Polyurethan beinhalten, insbesondere kann das Blend mit den stryrolhaltigen Polymeren (PS; SAN; SBC; SMA) ein thermoplastisches Polyurethan aufweisen. Das Mischungsverhältnis zwischen stryrolhaltigem Polymer und thermoplastischem Polyurethan kann dann zwischen 99:1 und 1:99, bevorzugt zwischen 50:50 und 3:97, liegen.

Für die erste Schicht und die zweite Schicht kann das gleiche thermoplastische Polyurethan verwendet werden. Das ist aber im Rahmen der Erfindung nicht zwingend erforderlich. Es können auch unterschiedliche thermoplastische Polyurethane zum Einsatz kommen.

Schutz begehrt wird ebenfalls für ein Sportgerät, dessen Oberfläche zumindest bereichsweise mit einer erfindungsgemäßen Oberflächenfolie bedeckt ist. Insbesondere kann eine Oberseite des Sportgeräts durch die erfindungsgemäße Oberflächenfolie bedeckt sein. Die Erfindung kann bei Skiern, Snowboards oder Wassersportgeräten zum Einsatz kommen.

Die erfindungsgemäße Oberflächenfolie kann dabei insbesondere so aufgebracht werden, dass die erste Schicht zwischen dem Sportgerät und der zweiten Schicht liegt.

Weitere Vorteile und Einzelheiten der Erfindung ergeben sich anhand der Figuren sowie der dazugehörigen Figurenbeschreibung. Dabei zeigen:
- Fig. 1: einen Querschnitt durch ein erfindungsgemäßes Sportgerät und
- Fig. 2: den Schichtenaufbau der erfindungsgemäßen Oberflächenfolie

In Figur 1 ist ein erfindungsgemäßes Sportgerät, in diesem Fall ein Ski, im Schnitt dargestellt. Zu erkennen sind die Oberflächenfolie 1, der Grundkörper 2 und eine Unterseite 3.

Ausführungsbeispiele für die Oberflächenfolie 1 sind in Zusammenhang mit der Figur 2 beschrieben.

Figur 2 zeigt eine Schnittdarstellung der Oberflächenfolie 1, die eine erste Schicht 5 und eine zweite Schicht 4 aufweist. Es hat sich gezeigt, dass ein Kunststoffblend aus einem styrolhaltigen Polymer und einem thermoplastischen Polyurethan die Anforderungen für den Einsatz als Oberflächenfolie erfüllt. Eine Herausforderung bei der Auswahl der Grundkomponenten eines transparenten Kunststoffblends besteht darin, Komponenten zu finden, die auch bei der Extrusion, die auf Doppelschneckenextrudern oder auf Einschneckenextrudern erfolgen kann, eine transparente Folie ergeben. Auch wenn die Grundkomponenten des Blends für sich transparent sind, sich aber in ihren Brechungsindizes unterscheiden, ist es nicht mehr möglich nach der Extrusion (beispielsweise) ein transparentes Blend zu erhalten. Bei der Mischung aus Polystyrol (PS), Styrol-Acrylnitril (SAN), Styrol-Block-Copolymere (SBC) bzw.

Styrol-Maleinsäureanhydrid (SMA) und thermoplastischem Polyurethan (TPU) hat sich gezeigt, dass die Transparenz eines Blends aus den genannten Komponenten in annähernd jedem Mischungsverhältnis erhalten bleibt. Das thermoplastische Polyurethan ist ein aromatisches Polyurethan und weist eine Härte von über 50 ShoreD auf. Die genannten styrolhaltigen Polymere enthalten keine Kautschukpartikel und müssen auch keine Polymerblends aus mehreren Komponenten sein. Vielmehr können Block-, Pfropf-, oder statistische Copolymere mit Styrol zum Einsatz kommen. Des Weiteren können durch das Mischungsverhältnis die Eigenschaften des Blends in einem weiten Bereich eingestellt werden.

Zwei Beispiele für die erfindungsgemäße Oberflächenfolie sind im Folgenden beschrieben:
Beispiel 1:
   Ein aromatisches TPU der Fa. Wanhua (Type WHT 1172IC) mit einer Härte von 66 ShoreD wird mit einem Polystyrol der Fa. Styrolution (Type PS158K) und einem Styrolmaleinsäureanhydrid-Copolymer der Fa. Polyscope (Type Xiran SZ23110) im Verhältnis 90:5:5 gemischt und zu einer Monofolie verarbeitet. Die Transparenz dieser Folie beträgt bei einer Foliendicke von 0,5 mm 79,3% und die Härte 64 ShoreD. Während die reine TPU Folie eine gute Beständigkeit gegenüber Lösungsmittel von Siebdruckfarben hat, kommt es bei der Blendfolie TPU/PS/SMA zu einem Anlösen bei Kontakt mit Lösungsmittel, wodurch die Farbhaftung der Siebdruckfarbe steigt. Die Vicat-Erweichungstemperatur VST A120 (nach DIN EN ISO 306) des Blends beträgt 120,6°C, während die reine TPU-Folie eine Erweichungstemperatur von nur 50,6°C hat.
Beispiel 2:
   Ein aromatisches TPU der Fa. Wanhua (Type WHT 1172IC) mit einer Härte von 66 ShoreD wird mit einem Styrolacrylnitril der Fa. Styrolution (Type Luran 348Q) und einem Styrolmaleinsäureanhydrid-Copolymer der Fa. Polyscope (Type Xiran SZ23110) im Verhältnis 90:5:5 gemischt und zu einer Monofolie verarbeitet. Die Transparenz dieser Folie beträgt bei einer Foliendicke von 0,5 mm 80% und die Härte 68 ShoreD. Die Vicat-Erweichungstemperatur VST A120 (nach DIN EN ISO 306) der reinen TPU-Folie liegt bei 50,6°C und jene des Blends 122,5°C.

Erfindungsgemäß kann auch das Einbringen von dekorativen oder funktionellen Füllstoffen in das genannte Blend vorgesehen sein. Dekorative Füllstoffe sind beispielsweise Farbpigmente oder Perlmut-Pigmente, welche vorwiegend das optische Erscheinungsbild der Folie beeinflussen. Funktionelle Füllstoffe können beispielsweise Glaskugeln sein, die die Abriebbeständigkeit verbessern. Die Zugabe von UV-Absorbern und UV-Stabilisatoren verbessern die Beständigkeit gegenüber UV-Einstrahlung.

## Patentansprüche

1. Oberflächenfolie für ein Sportgerät, insbesondere für Schier, Snowboards oder Wassersportgeräte, wobei zumindest eine Schicht (5), welche
- ein thermoplastisches Polyurethan (TPU) und ein Polystyrol (PS) beinhaltet und/oder
- ein thermoplastisches Polyurethan (TPU), ein Styrol-Acrylnitril (SAN) und ein Styrol-Maleinsäureanhydrid (SMA) beinhaltet,
**dadurch gekennzeichnet, dass** das thermoplastische Polyurethan ein aromatisches Polyurethan ist.

2. Oberflächenfolie nach Anspruch 1, wobei die zumindest eine Schicht (5) ein thermoplastisches Polyurethan (TPU) und ein Polystyrol (PS) beinhaltet, **dadurch gekennzeichnet, dass** die zumindest eine Schicht (5) zusätzlich ein Styrol-Blockcopolymer (SBC) und/oder ein Styrol-Maleinsäureanhydrid (SMA) beinhaltet.

3. Oberflächenfolie nach Anspruch 1 oder 2, **dadurch gekennzeichnet, dass** eine erste Schicht (5) und eine zweite Schicht (4) vorgesehen sind, wobei vorzugsweise die erste Schicht (5) und die zweite Schicht (4) ein thermoplastisches Polyurethan (TPU) beinhalten.

4. Oberflächenfolie nach Anspruch 3, **dadurch gekennzeichnet, dass** die Oberflächenfolie (1) genau zwei Schichten aufweist.

5. Oberflächenfolie nach Anspruch einem der Ansprüche 1 bis 4, **dadurch gekennzeichnet, dass** das aromatische Polyurethan eine Härte von zumindest 50 ShoreD aufweist.

6. Oberflächenfolie nach einem der Ansprüche 3 bis 5, **dadurch gekennzeichnet, dass** eine Schichtdickenverteilung zwischen der ersten und der zweiten Schicht zwischen 20:80 und 80:20 liegt.

7. Oberflächenfolie nach einem der vorhergehenden Ansprüche, **dadurch gekennzeichnet, dass** die zumindest eine Schicht (5) ein Blend aus Polystyrol (PS), ein Styrol-Acrylnitril (SAN), ein Styrol-Blockcopolymer (SBC) und/oder ein Styrol-Maleinsäureanhydrid (SMA) einerseits und thermoplastischem Polyurethan (TPU) andererseits aufweist, wobei das Mischungsverhältnis zwischen 99:1 und 1:99, bevorzugt zwischen 50:50 und 3:97, liegt.

8. Sportgerät, insbesondere Schi, Snowboard oder Wassersportgerät, mit einer Oberflächenfolie (1) nach einem der Ansprüche 1 bis 7, die eine Oberfläche des Sportgeräts zumindest bereichsweise abdeckt.

9. Sportgerät nach Anspruch 8 mit einer Oberflächenfolie nach Anspruch 3, **dadurch gekennzeichnet, dass** die Oberflächenfolie (1) so auf dem Sportgerät angeordnet ist, dass die erste Schicht (5) zwischen dem Sportgerät und der zweiten Schicht (4) liegt.

## Claims

1. A surface film for a sports device, in particular for skis, snowboards or water sports devices, wherein there is at least one layer (5) which
- contains a thermoplastic polyurethane (TPU) and a polystyrene (PS) and/or
- contains a thermoplastic polyurethane (TPU), a styrene-acrylonitrile (SAN) and a styrene-maleic anhydride (SMA),
**characterised in that** the thermoplastic polyurethane is an aromatic polyurethane.

2. A surface film according to claim 1 wherein the at least one layer (5) contains a thermoplastic polyurethane (TPU) and a polystyrene (PS), **characterised in that** the at least one layer (5) additionally contains a styrene block copolymer (SBC) and/or a styrene-maleic anhydride (SMA).

3. A surface film according to claim 1 or claim 2 **characterised in that** there are provided a first layer (5) and a second layer (4), wherein preferably the first layer (5) and the second layer (4) contain a thermoplastic polyurethane (TPU).

4. A surface film according to claim 3 **characterised in that** the surface film (1) has precisely two layers.

5. A surface film according to one of claims 1 to 4 **characterised in that** the aromatic polyurethane is of a hardness of at least 50 ShoreD.

6. A surface film according to one of claims 3 to 5 **characterised in that** a layer thickness distribution between the first and the second layers is between 20:80 and 80:20.

7. A surface film according to one of the preceding claims **characterised in that** the at least one layer (5) has a blend of polystyrene (PS), a styrene-acrylonitrile (SAN), a styrene block copolymer (SBS) and/or a styrene-maleic anhydride (SMA) on the one hand and a thermoplastic polyurethane (TPU) on the other hand, wherein the mixing ratio is between 99:1 and 1:99, preferably between 50:50 and 3:97.

8. A sports device, in particular a ski, snowboard or water sports device, comprising a surface film (1) according to one of claims 1 to 7, which at least region-wise covers a surface of the sports device.

9. A sports device according to claim 8 comprising a surface film according to claim 3 **characterised in that** the surface film (1) is so arranged on the sports device that the first layer (5) is between the sports device and the second layer (4).

## Revendications

1. Film de surface pour un équipement sportif, en particulier pour des skis, des planches à neige ou des équipements de sport nautique, dans lequel au moins une couche (5)
- renferme un polyuréthane thermoplastique (TPU) et un polystyrène (PS) et/ou
- renferme un polyuréthane thermoplastique (TPU), un acrylonitrile de styrène (SAN) et un anhydride maléique de styrène (SMA),
**caractérisé en ce que** le polyuréthane thermoplastique est un polyuréthane aromatique.

2. Film de surface selon la revendication 1, dans lequel l'au moins une couche (5) renferme un polyuréthane thermoplastique (TPU) et un polystyrène (PS), **caractérisé en ce que** l'au moins une couche (5) renferme en supplément un copolymère séquencé de styrène (SBC) et/ou un anhydride maléique de styrène (SMA).

3. Film de surface selon la revendication 1 ou 2, **caractérisé en ce qu'**une première couche (5) et une deuxième couche (4) sont prévues, dans lequel de préférence la première couche (5) et la deuxième couche (4) renferment un polyuréthane thermoplastique (TPU).

4. Film de surface selon la revendication 3, **caractérisé en ce que** le film de surface (1) présente précisément deux couches.

5. Film de surface selon l'une quelconque des revendications 1 à 4, **caractérisé en ce que** le polyuréthane aromatique présente une dureté d'au moins 50 Shore D.

6. Film de surface selon l'une quelconque des revendications 3 à 5, **caractérisé en ce qu'**une répartition d'épaisseur de couche entre la première et la deuxième couche se situe entre 20:80 et 80:20.

7. Film de surface selon l'une quelconque des revendications précédentes, **caractérisé en ce que** l'au moins une couche (5) présente un mélange composé de polystyrène (PS), un acrylonitrile de styrène (SAN), un copolymère séquencé de styrène (SBC) et/ou un anhydride maléique de styrène (SMA) d'une part et du polyuréthane thermoplastique (TPU) d'autre part, dans lequel le rapport de mélange se situe entre 99:1 et 1:99, de manière préférée entre 50:50 et 3:97.

8. Equipement sportif, en particulier ski, planche à neige ou équipement de sport nautique, avec un film de surface (1) selon l'une quelconque des revendications 1 à 7, qui recouvre au moins par endroits une surface de l'équipement sportif.

9. Equipement sportif selon la revendication 8 avec un film de surface selon la revendication 3, **caractérisé en ce que** le film de surface (1) est disposé de telle sorte sur l'équipement sportif que la première couche (5) se situe entre l'équipement sportif et la deuxième couche (4).
